Europäisches Patentamt

**European Patent Office**

**Office européen des brevets**

(11) Numéro de publication: **0 249 542**

**A1**

(12) **DEMANDE DE BREVET EUROPEEN**

(21) Numéro de dépôt: **87401270.1**

(22) Date de dépôt: **05.06.87**

(51) Int. Cl.³: **G 01 F 23/36**

(30) Priorité: **10.06.86 FR 8608344**

(43) Date de publication de la demande:
**16.12.87 Bulletin 87/51**

(84) Etats contractants désignés:
**DE ES FR GB IT**

(71) Demandeur: **VEGLIA**
**125, rue de Montreuil**
**F-75540 Paris Cédex 11(FR)**

(72) Inventeur: **Humbert, Jean**
**23 avenue des Alizées - Port Sud**
**F-91650 Breuillet (Essonne)(FR)**

(72) Inventeur: **Collas, Fernand**
**40 rue Edouard Vaillant**
**F-93170 Bagnolet (Seine-Saint-Denis)(FR)**

(74) Mandataire: **Bloch, Gérard et al,**
**6, rue du Faubourg Saint-Honoré**
**F-75008 Paris(FR)**

(54) **Sonde de mesure du niveau d'un liquide dans un réservoir, comprenant un flotteur commandant un potentiomètre.**

(57) Le flotteur (3) est solidaire du curseur (11) du potentiomètre (1) par l'intermédiaire d'un bras (4) rigide et élastiquement déformable.

La position relative de la résistance (10) et du curseur (11) du potentiomètre (1) est réglable, lorsque le bras (4) est immobilisé par rapport au réservoir.

L'invention s'applique par exemple aux sondes de mesure du niveau du carburant des véhicules automobiles.

FIG. 1

La présente invention a pour objet une sonde de mesure du niveau d'un liquide dans un réservoir, comprenant :

- un potentiomètre à résistance, pourvu d'un curseur mobile,

- un flotteur, solidaire d'un bras monté pivotant autour d'un axe solidaire de la résistance,

- des premiers moyens, solidaires du réservoir, pour supporter la résistance, et

- des deuxièmes moyens, solidaires du bras pour supporter le curseur.

Une telle sonde est utilisée en particulier pour mesurer le niveau de carburant dans le réservoir d'un véhicule automobile.

On connaît déjà des sondes du type défini ci-dessus, dans lesquelles le bras pivotant est réalisé dans un matériau rigide déformable, en l'occurence un métal ou un alliage métallique. Pour une sonde de ce type, la déformabilité du matériau est utilisée pour compenser l'écart entre la fonction de transfert réelle de la sonde et la fonction de transfert souhaitée, écart résultant par exemple des tolérances de fabrication. A cet effet, après assemblage des éléments constitutifs de la sonde, on en déforme légèrement le bras, dans un sens ou dans l'autre, afin que la valeur de la portion de résistance comprise entre une des extrémités de la résistance et le curseur mobile se trouve égale à une valeur déterminée pour une position déterminée du flotteur.

Toutes les fonctions de transfert sont ainsi "calées" sur le même point.

Toutefois, une telle sonde présente un inconvénient, lié au fait que le bras étant facilement déformable, il est

0249542

2

fréquent que celui-ci se trouve déformé lors du montage de la sonde convenablement réglée dans le réservoir. La mesure faite avec une telle sonde est naturellement entachée d'erreur.

La présente invention pallie cet inconvénient.

A cet effet, elle a pour objet une sonde du type défini ci-dessus, caractérisée par le fait que :

- le bras est réalisé en matériau rigide élastiquement déformable,

- lesdits premiers moyens supports et lesdits deuxièmes moyens supports sont agencés pour que, lorsque le bras est immobilisé par rapport au réservoir, la position relative de la résistance et du curseur soit réglable.

Le bras de la sonde de l'invention étant rigide, mais élastiquement déformable, il reprend sa forme et sa position d'origine après chacun des chocs qu'il subit. La sonde peut donc être montée sans précautions particulières. Alors, lorsque le flotteur est dans une position déterminée, on est certain que le bras et le curseur sont dans les positions déterminées correspondantes. Le réglage de la position relative de la résistance et du curseur permet donc le calage correct et définitif de la fonction de transfert de la sonde.

Dans une première forme de réalisation de la sonde de l'invention, lesdits premiers moyens supports sont agencés pour que la position de la résistance par rapport au réservoir soit réglable et lesdits deuxièmes moyens supports sont agencés pour que la position du curseur par rapport au bras soit fixe.

Dans une deuxième forme de réalisation, lesdits premiers moyens supports sont agencés pour que la position de la résistance par rapport au réservoir soit fixe et lesdits deuxièmes moyens supports sont agencés pour que la position du curseur par rapport au bras soit réglable.

La présente invention sera mieux comprise grâce à la description suivante de deux formes de réalisation de la sonde de l'invention, faite en se référant aux dessins annexés, sur lesquels :

- la figure 1 représente une vue en perspective d'une première forme de réalisation de la sonde de l'invention,

- la figure 2 représente une vue en perspective d'un détail de la sonde de la figure 1, non visible sur la figure 1, et montrant le support et le boîtier de la sonde de la figure 1,

- la figure 3 représente une vue de dessus du support et du boîtier de la sonde de la figure 1,

- la figure 4 représente une vue en coupe du bras et du boîtier d'une variante de réalisation de la sonde de la figure 1, et,

- la figure 5 représente une vue de dessus du support, du boîtier et du bras de la sonde de la figure 4.

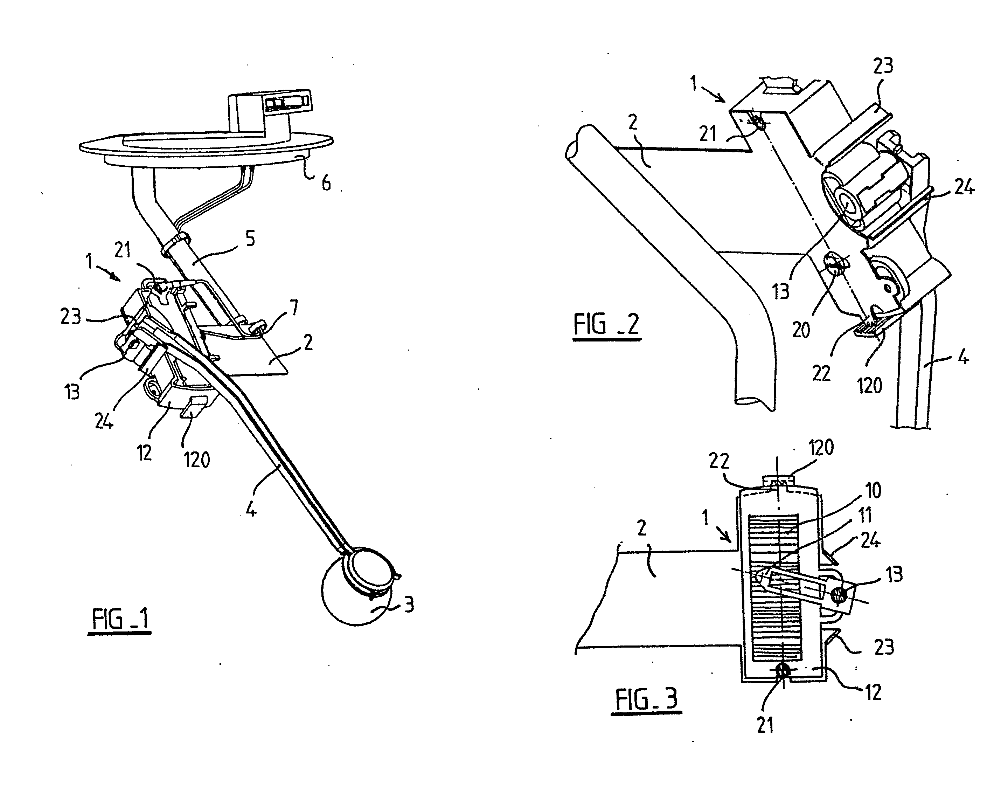

La figure 1 représente une sonde de mesure du niveau d'un liquide dans un réservoir. Cette sonde comprend un flotteur 3 solidaire d'un bras 4 monté pivotant autour d'un axe 13.

Le bras 4 est ici profilé et réalisé dans une matière plastique rigide choisie pour être élastiquement déformable.

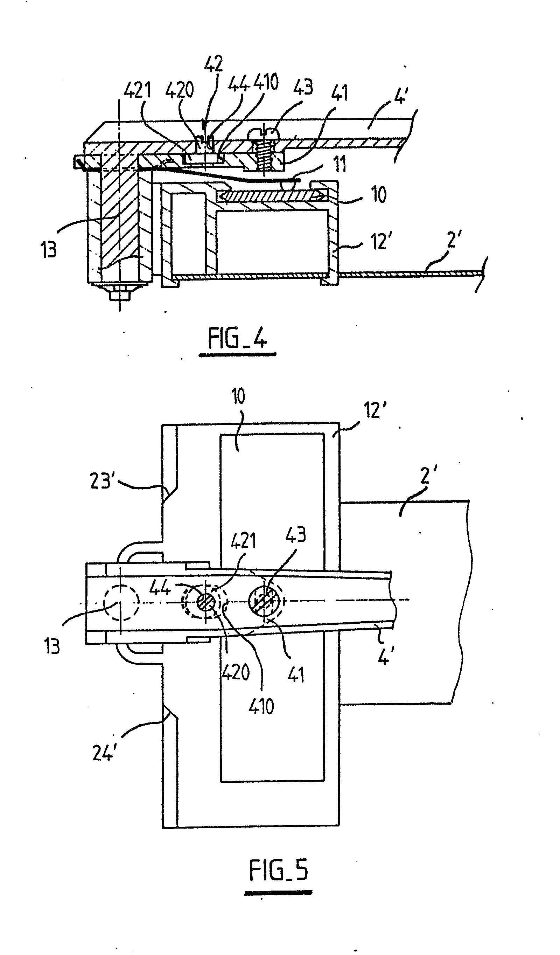

L'axe 13 est solidaire d'un boîtier 12, ici sensiblement parallélépipèdique, également visible sur les figures 2 et 3, aménagé pour recevoir, de façon amovible, une résistance 10 comprenant une longueur de fil métallique bobinée sur une plaquette.

Le boîtier 12 est monté pivotant autour d'un axe 21, solidaire d'un support 2 destiné à être fixé au réservoir par l'intermédiaire d'un tube 5, solidaire d'une embase 6 servant de bouchon à une ouverture du réservoir prévue pour le montage de la sonde. Le boîtier 12 peut être immobilisé par une vis 20 vissée sur le boîtier 12 et passant par un trou traversant oblong du support 2 pour permettre, de façon connue, le pivotement du boîtier 12 lorsque la vis 20 n'est pas totalement vissée et au contraire, immobiliser le boîtier 12 lorsque la vis 20 est vissée à fond dans le boîtier 12.

Un curseur 11, fixé au bras 4 par des moyens de type connu non visibles sur les figures se déplace sur la plaquette de la résistance 10.

Ainsi, on peut dire que la résistance 10, supportée par le support 2 et le boîtier 12, forme avec le curseur 11, supporté par les moyens de fixation au bras 4, un potentiomètre 1. De façon connue, des connexions électriques 7 sont prévues entre les bornes du potentiomètre 1 et l'extérieur du réservoir.

Le support 2 est pourvu, ici dans sa partie la plus éloignée de l'axe 21, d'une dent 22 dont l'extrémité est agencée pour coopérer avec une patte 120 du boîtier 12, également striée de façon à permettre, lorsque la vis 20 n'est pas vissée à fond, le pivotement du boîtier 12, par rapport au support 2, sous l'action d'un effort raisonnable, tout en maintenant le boîtier 12 et le support 2 dans la position relative où ils se trouvent, dès que cet effort cesse.

Le support 2 est pourvu de butées 23 et 24 de limitation du pivotement du bras 4 autour de l'axe 13.

La sonde qui vient d'être décrite fonctionne comme suit. De façon connue, lorsque la sonde est fixée à l'intérieur d'un réservoir, par exemple le réservoir de carburant d'une automobile, le flotteur 3, solidaire du curseur 11 par l'intermédiaire du bras 4, entraîne le curseur 11 dans une position qui dépend du niveau du carburant dans le réservoir. Ainsi les deux portions de la résistance 10 comprises entre le curseur 11 et chacune des deux extrémités de la résistance 10 dépendent du niveau de carburant dans le réservoir, la première de façon croissante et la deuxième, de façon décroissante.

Afin de mesurer le niveau, on mesure par exemple la valeur de la première portion de résistance 10 qui croît lorsque le niveau augmente. Afin d'obtenir toujours une valeur déterminée, par exemple une valeur nulle, de cette première portion, lorsque le flotteur 3 est dans une position déterminée, par exemple celle qui correspond au niveau minimal, la position du boîtier 12 par rapport au support 2 est réglable, afin de compenser les écarts d'une sonde à l'autre dus aux tolérances de fabrication. Pour procéder au réglage, l'opérateur place le support 2 et le flotteur 3 dans la position relative souhaitée, et après avoir légèrement divissé la vis 20, fait pivoter le boîtier 12. En même temps, il mesure la valeur de la première portion de résistance. Comme le bras 4 et donc le curseur 11 sont immobiles, la valeur de cette première portion de résistance varie en fonction de la position du boîtier 12, puisque la résistance 10 est solidiare de ce boîtier 12. Lorsque la valeur déterminée définie précédemment est atteinte, l'opérateur immobilise le boîtier 12 par rapport au support en vissant à fond la vis 20 dans le boîtier 12.

Au cours du réglage précédent, la manipulation du boîtier 12 est facilitée par la dent 22 du support 2 qui coopère avec la patte 120 du boîtier 12 pour maintenir en place le boîtier 12 sans vissage de la vis 20.

Lorsque le réglage est effectué, la sonde est installée dans le réservoir. Si le bras 4 subit un choc pendant cette opération, il se déformera élastiquement, mais reprendra aussitôt sa position initiale, et le réglage correct sera conservé.

Comme on s'intéresse ici en fait au volume du carburant et que, compte tenu de la forme parfois complexe du réservoir, ce volume n'est en général pas proportionnel au niveau, on réalise, de façon connue, un bobinage du fil métallique sur la plaquette avec un pas variable, adapté à la forme du réservoir, afin que la valeur de la première portion de la résistance 10 soit proportionnelle au volume de carburant dans le réservoir. On peut également utiliser, au lieu d'une résistance 10 en fil bobiné, une résistance comprenant une couche résistive déposée sur la plaquette, par un procédé connu de dépôt, de forme ou d'épaisseur variable pour être adaptée à la forme du réservoir. En général, et à titre d'exemple, on s'arrange pour le coefficient de proportionnalité soit de 5$\Omega$ par litre, quelque soit le type du réservoir. Ceci permet une normalisation des circuits électroniques de mesure utilisés en aval de la sonde.

A cet effet, il est avantageux que la plaquette supportant la résistance 10 soit amovible, ce qui permet d'adapter le même type de sonde à diverses formes de réservoir en changeant uniquement la résistance 10.

Les butées 23 et 24 sont prévues pour empêcher le flotteur 3 de venir frapper les parois du réservoir lorsque le véhicule est soumis à des secousses, par exemple parce qu'il se déplace.

Les figures 4 et 5 représentent une variante de la sonde dont la configuration et le fonctionnement viennent d'être décrits. Sur ces figures, les éléments identiques à ceux rencontrés ci-dessus sont désignés par les mêmes références.

Un boitier 12', sensiblement parallélépipédique et prévu pour supporter la résistance 10, est ici fixé, de façon connue, à un support 2' sans que sa position par rapport à ce support 2' soit réglable.

Le boitier 12' est solidaire de l'axe 13 et est aménagé pour que la résistance 10 soit amovible, comme précédemment le boitier 12.

Le support 2' est semblable au support 2 et fixé comme celui-ci, par l'intermédiaire du tube 5, à l'embase 6; ces derniers éléments ne sont pas représentés, pour des raisons de simplicité, sur les figures 4 et 5.

Un bras 4', comparable au bras 4 précédent, et solidaire, comme lui, du flotteur 3, est monté pivotant autour de l'axe 13.

Le support 2' n'est pas ici pourvu, comme précédemment le support 2, de butées de limitation du pivotement du bras 4' autour de l'axe 13. Par contre le boitier 12' comporte des butées 23' et 24' destinées à assurer cette fonction.

Une contreplaque 41, sur laquelle est fixé le curseur 11, est montée pivotante autour de l'axe 13 et disposée contre la partie du bras 4' qui se trouve en regard du boitier 12' et de la résistance 10. La contreplaque 41 est pourvue d'une vis 43 vissée sur la contreplaque 41 et passant par un trou traversant oblong du bras 4' pour permettre, de façon connue, le pivotement de la contreplaque 41 par rapport au bras 4' lorsque la vis 43 n'est pas totalement vissée et, au contraire, immobiliser la contreplaque 41 par rapport au bras 4' lorsque la vis 43 est vissée à fond dans la contreplaque 41.

8

Un excentrique 42, comportant une embase 421 et une tête d'entraînement 420, cylindrique excentrée par rapport à l'embase, est disposé dans un trou traversant 44 du bras 4' de telle sorte que l'embase 421 coopère avec un évidement 410, oblong, de la contreplaque 41. Lorsque l'on fait tourner la tête 420, il en résulte donc un décalage de la position relative de la contreplaque 41 et du bras 4'.

La sonde qui vient d'être décrite fonctionne de façon analogue à là sonde précédente, à ceci près que le réglage effectué avant le montage définitif de la sonde est obtenu en déplaçant la contreplaque 41 au lieu de déplacer le boîtier 12. La contreplaque 41 est déplacée en faisant tourner la tête 420, puis immobilisée, par rapport au bras, à l'aide de la bis 43.

Revendications

1.- Sonde de mesure du niveau d'un liquide dans un réservoir, comprenant :

- un potentiomètre (1) à résistance (10), pourvu d'un curseur (11) mobile,

- un flotteur (3), solidaire d'un bras (4; 4') monté pivotant autour d'un axe (13) solidaire de la résistance (10),

- des premiers moyens (2, 12; 2', 12'), solidaires du réservoir, pour supporter la résistance (10), et

- des deuxièmes moyens (41), solidaires du bras (4; 4') pour supporter le curseur (11),

sonde caractérisée par le fait que :

- le bras (4; 4') est réalisé en matériau rigide élastiquement déformable,

- lesdits premiers moyens supports (2, 12; 2', 12') et lesdits deuxièmes moyens supports (41) sont agencés pour que, lorsque le bras (4; 4') est immobilisé par rapport au réservoir, la position relative de la résistance (10) et du curseur (11) soit réglable.

2.- Sonde selon la revendication 1, dans laquelle lesdits premiers moyens supports (2, 12) sont agencés pour que la position de la résistance (10) par rapport au réservoir soit réglable et lesdits deuxièmes moyens supports sont agencés pour que la position du curseur (11) par rapport au bras (4) soit fixe.

3.- Sonde selon la revendication 1, dans laquelle lesdits premiers moyens supports (2', 12') sont agencés pour que la position de la résistance (10) par rapport au réservoir soit fixe et lesdits deuxièmes moyens supports (41) sont agencés pour que la position du curseur (11) par rapport au bras (4') soit réglable.

4.- Sonde selon la revendication 2, dans laquelle lesdits premiers moyens supports comprenant un boîtier (12) pour la résistance (10), monté pivotant autour d'un axe (21) solidaire d'un support (2) fixé au réservoir, le boîtier (12) étant pourvu d'une vis (20) pour l'immobiliser par rapport au support (2).

5.- Sonde selon la revendication 4, dans laquelle sont prévus des moyens (22, 120) de maintien du boîtier (12) en cours de réglage.

6.- Sonde selon la revendication 3, dans laquelle lesdits deuxièmes moyens supports comprennent une contreplaque (41) sur laquelle est fixé le curseur (11), la contreplaque (41) étant montée pivotante autour de l'axe (13) et pourvue d'une vis (43) pour l'immobiliser par rapport au bras (4').

7.- Sonde selon la revendication 6, dans laquelle la position de la contreplaque (41) par rapport au bras (4') est ajustée à l'aide d'un excentrique (42) monté pivotant sur le bras (4').

8.- Sonde selon l'une des revendications 1 à 7, dans laquelle la résistance (10) est montée amovible sur lesdits premiers moyens supports (2, 12; 2', 12').

9.- Sonde selon la revendication 8, dans laquelle la résistance (10) comprend une longueur de fil métallique bobiné sur une plaquette.

10.- Sonde selon la revendication 8, dans laquelle la résistance (10) comprend une couche résistive déposée sur une plaquette.

11.- Sonde selon l'une des revendications 1 à 10, dans laquelle le matériau du bras (4; 4') est une matière plastique.

FIG_1

FIG_2

FIG_3

1/2

0249542

0249542

FIG_4

FIG_5

## 0249542
Numéro de la demande

**Office européen des brevets**

**RAPPORT DE RECHERCHE EUROPEENNE**

EP 87 40 1270

| DOCUMENTS CONSIDERES COMME PERTINENTS | | | | |
|---|---|---|---|
| Catégorie | Citation du document avec indication, en cas de besoin, des parties pertinentes | Revendication concernée | CLASSEMENT DE LA DEMANDE (Int. Cl.4) |
| X | US-A-1 771 794 (L.L. KING)<br>* Figures 8-11 *<br><br>--- | 1,3-9 | G 01 F 23/36 |
| A | US-A-3 739 641 (TAYLOR et al.)<br><br>* Figures; colonne 3, lignes 1-17 *<br><br>--- | 1,2,4,8 | |
| A | US-A-2 728 226 (VANDERBERG et al.)<br>* Figures; colonne 2, ligne 70 - colonne 4, ligne 25 *<br><br>----- | | |

DOMAINES TECHNIQUES RECHERCHES (Int. Cl.4)

G 01 F

Le présent rapport de recherche a été établi pour toutes les revendications

| Lieu de la recherche | Date d'achèvement de la recherche | Examinateur |
|---|---|---|
| LA HAYE | 23-09-1987 | NUIJTEN E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82